(19)

**Europäisches Patentamt**

**European Patent Office**

**Office européen des brevets**

(11) **EP 4 261 735 A1**

(12) **EUROPEAN PATENT APPLICATION**

(43) Date of publication:
**18.10.2023 Bulletin 2023/42**

(21) Application number: **22167932.7**

(22) Date of filing: **12.04.2022**

(51) International Patent Classification (IPC):
**G06F 40/35** (2020.01)        **G06F 7/58** (2006.01)
**G06N 10/00** (2022.01)        G06F 40/216 (2020.01)
G06F 40/232 (2020.01)        G06F 40/253 (2020.01)
G06F 40/289 (2020.01)        G06F 40/295 (2020.01)

(52) Cooperative Patent Classification (CPC):
**G06F 40/35; G06N 10/00;** G06F 40/216;
G06F 40/232; G06F 40/253; G06F 40/289;
G06F 40/295

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Terra Quantum AG**
**9400 Rorschach (CH)**

(72) Inventors:
• **Lesovik, Gordey**
 **9400 Rorschach (CH)**
• **Marchenko, Artemiy**
 **9400 Rorschach (CH)**
• **Vinokour, Valerii**
 **9400 Rorschach (CH)**

• **Malinovskii, Vladimir**
 **9400 Rorschach (CH)**
• **Khoruzhii, Kirill**
 **9400 Rorschach (CH)**
• **Ignatov, Fedor**
 **9400 Rorschach (CH)**
• **Matrenok, Semen**
 **9400 Rorschach (CH)**
• **Kirakosyan, Davit**
 **9400 Rorschach (CH)**
• **Terentev, Vladimir**
 **9400 Rorschach (CH)**

(74) Representative: **Kretschmann, Dennis**
 **Boehmert & Boehmert**
 **Anwaltspartnerschaft mbB**
 **Pettenkoferstrasse 22**
 **80336 München (DE)**

(54) **NATURAL LANGUAGE PROCESSING BY MEANS OF A QUANTUM RANDOM NUMBER GENERATOR**

(57)    A method for natural language processing comprises: receiving a sample comprising natural language; processing the sample, wherein processing the sample comprises generating a plurality of response hypotheses and generating a plurality of confidence values, wherein each response hypothesis is associated with the corresponding confidence value; and selecting a response, comprising selecting the response randomly among the plurality of response hypotheses based at least in part on the corresponding confidence value by means of a quantum random number generator.

Fig. 1

**Description**

Technical Field

The disclosure relates to techniques for natural language processing that employ a quantum random number generator, in particular to techniques for creating a conversational chatbot by means of a quantum random number generator.

Background

A chat robot (or chatbot) is a device that simulates human conversation using natural language input, such as a text or a speech input. Chatbots maybe implemented in dialogue systems to perform various practical tasks, including automated customer support or information acquisition. Conventionally, many sophisticated chatbots make use of artificial intelligence and machine learning techniques, such as deep neural networks, and may employ stochastic techniques. While the ultimate goal is to present the user with an experience akin to conversing with a human being, all current chatbots still have significant limitations and fall short of that goal. In particular, many existing chatbots manifest artefacts that reveal the underlying algorithm and create the impression for the user that their requests are being dealt with by machines rather than by human beings.

Overview

In view of the state of the art, there remains a need for natural language processing techniques that lift the existing chatbot limitations and provide a chatbot that presents a user experience more akin to conversing with a human being.

This objective is achieved by means of a method for natural language processing according to independent claim 1, and a system for natural language processing according to independent claim 10. The dependent claims relate to preferred embodiments.

In a first aspect, the disclosure relates to a method for natural language processing, comprising: receiving a sample comprising natural language; processing the sample, wherein processing the sample comprises generating a plurality of response hypotheses and generating a plurality of confidence values, wherein each response hypothesis is associated with a corresponding confidence value; and selecting a response, comprising selecting the response randomly among the plurality of response hypotheses based at least in part on the corresponding confidence value by means of a quantum random number generator.

Quantum objects are known to constitute the only carriers of true randomness, and quantum random number generators may demonstrate truly unpredictable behavior. Employing a quantum random number generator in selecting the response among the plurality of response hypotheses may significantly enhance the capabilities of the natural language processing, and in particular may permit a chatbot to output responses that avoid repetitive patterns and emulate the response behavior and free will of human dialogue partners much better than what can be achieved with conventional natural language processing techniques.

In the context of the present disclosure, a quantum random number generator may denote a hardware random number generator that is capable of generating random numbers from a quantum physical process. In particular, the quantum random number generator may be a hardware device adapted to implement a quantum physical process, and further adapted to derive random numbers based on the quantum physical process.

Quantum physics predicts that certain physical phenomena are fundamentally random, and cannot, in principle, be predicted. These phenomena may comprise nuclear decay, shot noise or photons traveling through a semi-transparent mirror. In general, all quantum phenomena that demonstrate true unpredictability can be employed in a quantum random number generator according to the present disclosure. Quantum optical processes are often very convenient to implement and relatively easy to handle, and hence provide good examples of quantum random number generators for many practically relevant scenarios.

An overview of the basics and exemplary systems for quantum random number generators that may be employed in the context of the present disclosure can be found in M. Herrero-Collantes, J. C. Garcia-Escartin, "Quantum Random Number Generators", Reviews of Modern Physics 89 (2017) 015004 (also available from the Cornell preprint server, arXiv: 1604.03304).

According to an embodiment, selecting the response comprises receiving a random number from the quantum random number generator.

In particular, selecting the response may comprise selecting the response randomly among the plurality of response hypotheses based at least in part on the corresponding confidence value and the received random number.

According to an embodiment, selecting the response comprises invoking or querying the quantum random number generator.

In response to invoking or querying the quantum random number generator, the quantum random number generator may output at least one random number that can be employed in selecting the response randomly among the plurality of response hypotheses.

In other embodiments, the quantum random number generator may provide a random number without being actively invoked or queried. For example, the quantum random number generator may provide a random number, or a plurality of random numbers, at regular time intervals.

In particular, selecting the response may comprise receiving at least one random number from the quantum random number generator at regular time intervals.

According to an embodiment, selecting the response comprises generating a probability distribution for the plurality of response hypotheses with corresponding weights that are based on the respective confidence values.

The respective weights may be chosen proportional to the respective confidence values on which they are based. In particular, the respective weights may be chosen from the confidence values by normalizing the confidence values, such that they sum up to 1.

Selecting the response may further comprise selecting among the plurality of response hypotheses randomly according to the corresponding weights by means of the quantum random number generator.

According to an embodiment, selecting the response comprises comparing the corresponding confidence value with a predetermined threshold value, and selecting the response randomly among the plurality of response hypotheses based at least in part on the corresponding confidence value by means of the quantum random number generator in case the corresponding confidence value is smaller than the predetermined threshold value.

In particular, the method may involve selecting the response randomly among the plurality of response hypotheses based at least in part on the corresponding confidence value by means of the quantum random number generator only in case the corresponding confidence value is smaller than the predetermined threshold value.

In this way, the response may be selected randomly from among the plurality of response hypotheses only if all the respective confidence values, or all the corresponding weights, are smaller than a predetermined threshold value.

In case at least one of the plurality of response hypotheses has a corresponding confidence value, or a corresponding weight, that is no smaller than the predetermined threshold value, the response may be chosen deterministically from among this subset of response hypotheses.

In particular, in this case the response may be selected as the response hypothesis having the largest confidence value, or the largest weight.

Hence, according to an embodiment the method comprises selecting the response deterministically among the plurality of response hypotheses based at least in part on the corresponding confidence value in case the corresponding confidence value is no smaller than the predetermined threshold value.

These techniques may balance deterministic and stochastic methods for selecting the response, and may guarantee that responses with very high confidence values are prioritized.

According to an embodiment, selecting the response may comprise preselecting the plurality of response hypotheses according to predefined criteria.

Preselecting the plurality of response hypotheses may comprise discarding a response hypothesis according to the predefined criteria.

For instance, toxic responses or responses that do not comply with conformity requirements for acceptable responses may be discarded.

Preselecting may comprise lowering a confidence value or weight of the respective response hypothesis, in particular setting the confidence value or weight of the respective response hypothesis to o.

In the context of the present disclosure, the natural language may comprise any form of language or signals representing language, including written text and/or speech signals.

The sample may be understood to denote any string of characters or words of natural language, and maybe provided in any format susceptible to electronic data processing. For instance, the sample may represent a statement or a question that a human user may utter when conversing with a chatbot.

In particular, the method may comprise receiving the sample from a human user.

According to an embodiment, the sample maybe an annotated sample.

In the context of the present disclosure, the sample may be referred to as an annotated sample in case the sample is processed by natural language processing (NLP) models, the output of which may not directly generate a response but may assist in generating response candidates or selecting the response.

In particular, the method may comprise annotating the sample.

According to an embodiment, the sample maybe annotated prior to generating the plurality of response hypotheses and generating the plurality of confidence values.

Annotating the sample may comprise spelling preprocessing and/or sentence segmentation.

In the context of the present disclosure, the response hypotheses represent candidates for replies to the sample.

The confidence value may represent a probability or likelihood that the corresponding response hypothesis is a meaningful reply to the sample.

According to an embodiment, the method may further comprise returning the selected response, in particular returning the selected response to the human user.

The plurality of response hypotheses may be generated by any response generation technique, in particular by any natural language processing technique.

According to an embodiment, processing the sample may comprise generating the plurality of response hypotheses by at least two different response generation techniques.

The different response generation techniques may optionally comprise stochastic response generation techniques and/or deterministic response generation techniques.

In particular, processing the sample may comprise generating at least a part of the plurality of response hypotheses by means of a neural network.

Any of the different response generation techniques may generate one or a plurality of response hypotheses among which the method may subsequently select.

According to an embodiment, generating the plurality of response hypotheses may comprise generating at least a part of the plurality of response hypotheses by means of the quantum random number generator.

In this way, the superior characteristics of the quantum random number generator may not only be harnessed in selecting the response from the plurality of response hypotheses, but also in generating the response hypotheses in the first place.

According to an embodiment, generating the plurality of response hypotheses comprises selecting words of the response hypotheses randomly, in particular by means of the quantum random number generator.

In an embodiment, generating the plurality of response hypotheses comprises receiving a random number from the quantum random number generator, and generating at least a part of the plurality of response hypotheses based on the received random number.

Generating the plurality of response hypotheses may comprise querying or invoking the quantum random number generator.

In other embodiments, the quantum random number generator may provide a random number without being actively invoked or queried. For example, the quantum random number generator may provide a random number, or a plurality of random numbers, at regular time intervals.

In particular, generating the plurality of response hypotheses may comprise receiving at least one random number from the quantum random number generator at regular time intervals.

According to an embodiment, the method may be a computer-implemented method.

In a second aspect, the disclosure relates to a computer program or to a computer program product comprising computer-readable instructions, wherein the instructions, when read on a computer, cause the computer to implement a method with some or all of the features described above.

The computer program product may be or may comprise a computer readable medium.

In a third aspect, the disclosure relates to a system for natural language processing, comprising: a receiving unit adapted to receive a sample comprising natural language; a processing unit adapted to process the sample, wherein the processing unit is adapted to generate a plurality of response hypotheses and to generate a plurality of confidence values, wherein each response hypothesis is associated with a corresponding confidence value; and a selecting unit adapted to select a response, wherein the selecting unit is adapted to select the response randomly among the plurality of response hypotheses based at least in part on the corresponding confidence value by means of a quantum random number generator.

According to an embodiment, the system, in particular the selecting unit, is adapted to couple to the quantum random number generator, and to receive a random number from the quantum random number generator.

The selecting unit may be adapted to select response randomly among the plurality of response hypotheses based at least in part on the corresponding confidence value and the received random number.

According to an embodiment, the selecting unit is adapted to invoke or query the quantum random number generator.

In other embodiments, the quantum random number generator may provide a random number to the system, in particular to the selecting unit, without being actively invoked or queried. For example, the quantum random number generator may provide a random number, or a plurality of random numbers, at regular time intervals.

Hence, the system, in particular the selecting unit, may be adapted to couple to the quantum random number generator, and to receive at least one random number from the quantum random number generator at regular time intervals.

In an embodiment, the system may comprise the quantum random number generator.

According to an embodiment, the selecting unit is adapted to generate a probability distribution for the plurality of response hypotheses with corresponding weights that are based on the confidence values, wherein the selecting unit is further adapted to select among the plurality of response hypotheses randomly according to the corresponding weights by means of the quantum random number generator.

The selecting unit maybe adapted to compare the corresponding confidence value with a predetermined threshold value, and may be further adapted to select the response randomly among the plurality of response hypotheses based at least in part on the corresponding confidence value by means of the quantum random number generator in case the corresponding confidence value is smaller than the predetermined threshold value.

In particular, the selecting unit may be adapted to select the response randomly among the plurality of response hypotheses based at least in part on the corresponding confidence value by means of the quantum random number generator only in case the corresponding confidence value is smaller than the predetermined threshold value.

According to an embodiment, the selecting unit is adapted to select the response deterministically among the plurality of response hypotheses based at least in part on the corresponding confidence value in case the corresponding confidence value is no smaller than the predetermined threshold value.

In an embodiment, the selecting unit may be adapted to preselect the response hypotheses according to predefined criteria. In particular, the selecting unit may be adapted to discard a response hypothesis according to the predefined criteria.

According to an embodiment, the system may further comprise an output unit adapted to return the selected response.

In an embodiment, the processing unit may be adapted to generate the plurality of response hypotheses by different response generation techniques, wherein the different response generation techniques may optionally comprise stochastic response generation techniques and/or deterministic response generation techniques.

According to an embodiment, the processing unit may comprise a neural network adapted to generate at least a part of the plurality of response hypotheses.

In an embodiment, the processing unit is adapted to generate at least a part of the plurality of response hypotheses by means of the quantum random number generator.

In particular, the processing unit may be adapted to select words of the response hypotheses randomly, in particular by means of the quantum random number generator.

According to an embodiment, the processing unit may be adapted to receive a random number from the quantum random number generator.

In particular, the processing unit may be further adapted to generate at least a part of the plurality of response hypotheses based on the received random number.

In an embodiment, the processing unit may be adapted to query or invoke the quantum random number generator.

In other embodiments, the quantum random number generator may provide a random number to the processing unit without being actively invoked or queried. For example, the quantum random number generator may provide a random number, or a plurality of random numbers, at regular time intervals.

Hence, the processing unit may be adapted to receive at least one random number from the quantum random number generator at regular time intervals.

According to an embodiment, the quantum random number generator is connected to the selecting unit and/or to the processing unit by means of a communication line.

The system may further comprise an annotator unit adapted to annotate the sample, in particular to annotate the sample prior to generating the plurality of response hypotheses and generating the plurality of confidence values.

According to an embodiment, the receiving unit and/or the processing unit and/or the selecting unit and/or the output unit and/or the annotator unit may be implemented in hardware. In other embodiments, the receiving unit and/or the processing unit and/or the selecting unit and/or the output unit and/or the annotator unit may be implemented in software or firmware. In still further embodiments, the receiving unit and/or the processing unit and/or the selecting unit and/or the output unit and/or the annotator unit may be implemented partly in hardware and partly in software or firmware.

In some embodiments, the receiving unit and/or the processing unit and/or the selecting unit and/or the output unit and/or the annotator unit are separate stand-alone units that may be communicatively coupled to one another. In other embodiments, at least two of these units may be integrated into a common unit.

Brief Description of the Drawings

The features of the present disclosure and the advantages associated therewith are best understood from a detailed description of exemplary embodiments with reference to the accompanying drawings, in which:

Fig. 1    is a schematic illustration of a system for natural language processing according to an embodiment;

Fig. 2    is a flow diagram illustrating a method for natural language processing according to an embodiment;

Fig. 3     is a schematic illustration of a specific implementation of a system for natural language processing according to an embodiment;

Fig. 4     illustrates techniques for generating a response hypotheses according to an embodiment; and

Fig. 5     is a decision tree illustrating a method for selecting a response among a plurality of response hypotheses according to an embodiment.

Detailed Description

The techniques of the present disclosure will now be described chiefly with reference to the example of a chatbot system 10, 10' that receives samples comprising natural language from a user, such as in the form of written text, voice or other signals, processes the sample and generates a response that can be output to the user. However, the techniques of the present disclosure may also be applied in various other contexts of natural language processing or information processing in general.

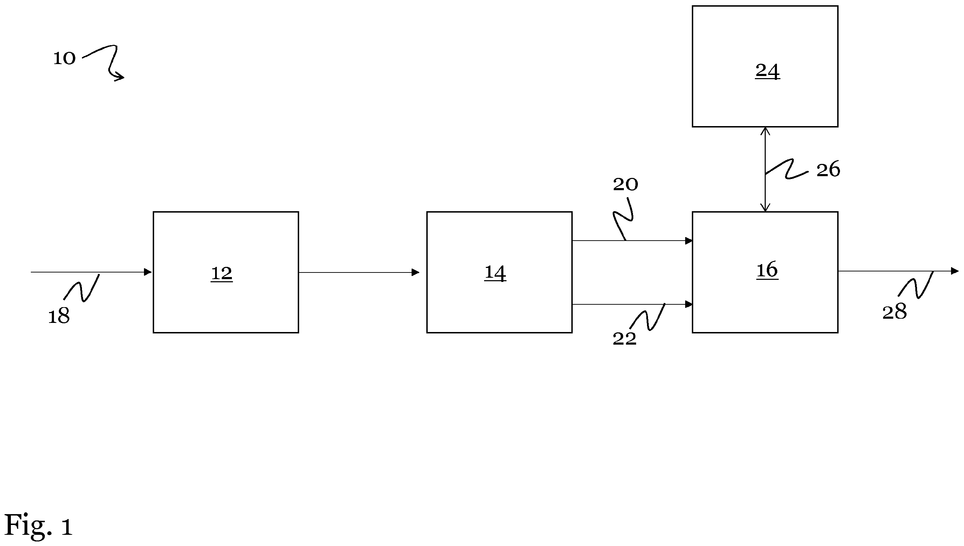

Fig. 1 is a schematic illustration of a system 10 for natural language processing according to an embodiment. The system 10 comprises a receiving unit 12, a processing unit 14 communicatively coupled to the receiving unit 12, and a selecting unit 16 communicatively coupled to the processing unit 14.

The receiving unit 12 is adapted to receive a sample 18 comprising natural language. For instance, the sample 18 may be received from the human user (not shown), and may comprise natural language in the form of written text. In these instances, the receiving unit 12 may comprise an input front-end having a keyboard or some other kind of text input interface. In other embodiments, the sample 18 may comprise natural language in the form of audio signals, and the receiving unit 12 may comprise a speech microphone or some other form of speech input interface. In still further embodiments, the sample 18 may be received from an external data processing unit (not shown), and may comprise data signals representative of text or speech representing natural language.

The processing unit 14 shown in Fig. 1 may be adapted to receive the sample 18 from the receiving unit 12, and is adapted to process the sample 18. In particular, the processing unit is adapted to generate a plurality of response hypotheses 20 and to generate a plurality of confidence values 22, wherein each response hypotheses 20 is associated with a corresponding confidence value 22.

According to an embodiment, the response hypotheses 20 may represent candidates for replies to the sample 18. The response hypotheses 20 may be generated by a variety of different (deterministic or stochastic) response generation techniques, comprising artificial intelligence and machine learning. The confidence values 22 may represent the probability or likelihood that the corresponding response hypothesis 20 is a meaningful reply to the sample 18, according to predefined criteria.

As further shown in Fig. 1, the selecting unit 16 may be communicatively coupled to a quantum random number generator 24 via a data connection 26. In the context of the present disclosure, a quantum random number generator 24 may be understood as a hardware random number generator which may be adapted to generate random numbers from a quantum physical process, such as a quantum optical process. For instance, in a quantum random number generator 24 photons may be generated by a laser and may be send through a beam splitter, so that they may end up in one of two different output branches, where they may be detected by means of photon detectors. The probability for the photons to be detected in a given branch depends on the properties of the beam splitter, but the laws of quantum physics do not allow predicting, for an individual photon, in which output branch the photon will be detected. Hence, the outcome is probabilistic at a fundamental level, according to the current state of physics. Assigning an output value "0" to the first output branch and an output value "1" to the second output branch therefore yields a sequence of binary random numbers. The underlying probability distribution depends on the properties of the beam splitter. For instance, if the beam splitter is a 50/50 beam splitter, the sequence of binary output numbers is independent and identically distributed (i.i.d.). Other physical processes that exhibit true randomness and can be employed in a quantum random number generator 24 according to the present disclosure comprise the change of electron occupation numbers in semiconductors.

Different quantum random number generators that may be employed in the context of the present disclosure are described in M. Herrero-Collantes, J. C. Garcia-Escartin, "Quantum Random Number Generators", Reviews of Modern Physics 89 (2017) 015004 (arXiv:1604.03304), as well as in the references cited therein.

In some embodiments, the quantum random number generator 24 may be a unit external to the system 10, and may be communicatively coupled to the selecting unit 16 by means of the data connection 26. In other embodiments, the quantum random number generator 24 may form part of the system 10, or may even be integrated into the selecting unit 16.

The selecting unit 16 may be adapted to receive the plurality of response hypotheses 20 and the plurality of associated confidence values 22, and may be adapted to select a response 28 randomly among the plurality of response hypotheses 20 based at least in part on the corresponding confidence value 22 by means of the quantum random number generator 24. For instance, the selecting unit 16 may be adapted to invoke or query the quantum random number generator 24 via the data connection 26. In response to the query, the quantum random number generator 24 may provide a random number or a plurality of random numbers to the selecting unit 16 via the data connection 26, and the selecting unit 16 may select among the plurality of response hypotheses 20 randomly based at least in part on the corresponding confidence value 22 and the received random number(s).

The system 10 may be further adapted to output the selected response 28 to the user, as a response to the sample 18.

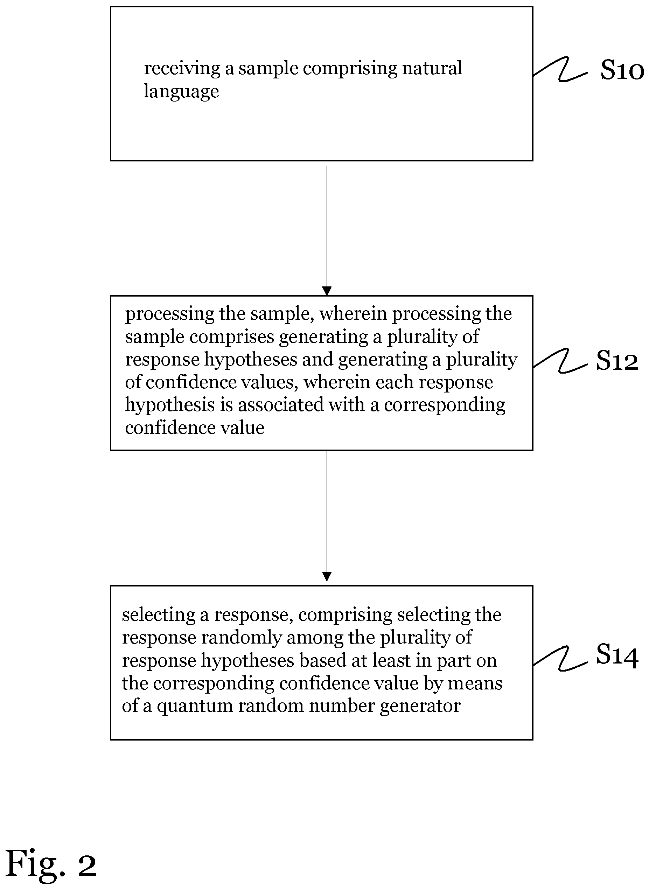

Fig. 2 is a flow diagram illustrating a method for natural language processing according to an embodiment, such as a method described above with reference to the chatbot system 10.

In a first step S10, a sample comprising natural language is received.

In a subsequent second step S12, the method comprises processing the received sample, wherein processing the sample comprises generating a plurality of response hypotheses and generating a plurality of confidence values, wherein each response hypothesis is associated with a corresponding confidence value.

In a subsequent third step S14, the method comprises selecting a response, comprising selecting the response randomly among the plurality of response hypotheses based at least in part on the corresponding confidence value by means of a quantum random number generator.

By iterating the process described above with reference to Figures 1 and 2, the chatbot system 10 may enter with the user into a dialogue comprising a plurality of rounds of statements and replies. The reliance of the chatbot system 10 on the quantum random number generator 24 guarantees that the responses 28 generated by the chatbot system 10 comprise an element of true randomness and unpredictable behavior that cannot be simulated with a classical (pseudo) random number generator, and therefore may reflect the free will of a human conversational partner.

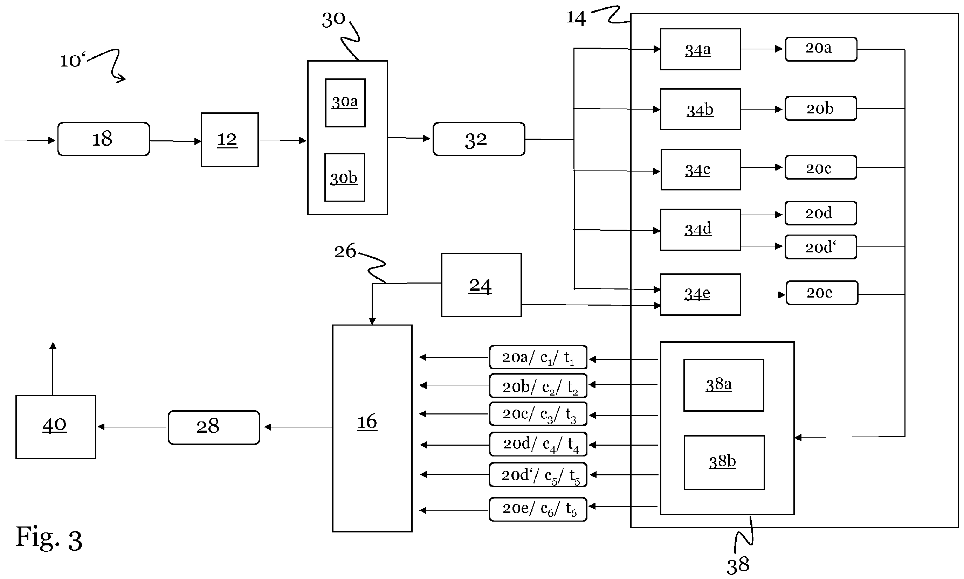

Fig. 3 is a schematic illustration that shows a system 10' for natural language processing in additional levels of detail.

The system 10' generally corresponds to the system 10 described above with reference to Figures 1 and 2, and corresponding elements have the same reference numerals.

In particular, the system 10' comprises a receiving unit 12 adapted to receive a sample 18 comprising natural language, a processing unit 14 and a selecting unit 16 that is connected to a quantum random number generator 24 by means of a data connection 26, as described above with reference to Fig. 1.

However, the system 10' additionally comprises an annotator unit 30 downstream of the receiving unit 12 and upstream of the processing unit 14. The annotator unit 30 is adapted to receive the sample 18 from the receiving unit 12, and to annotate the sample 18. For instance, the annotator unit 30 may comprise a spelling unit 30a and a segmentation unit 30b, which may be adapted to receive the sample 18 from the receiving unit 12 and to preprocess the sample 18.

The spelling unit 30a may be adapted for spelling prepossessing, such as to correct typos in the input sample 18. The spelling unit 30a may make use of the automatic spelling correction pipelines provided by DeepPavlov.ai, an open source conversational AI framework developed by the Neural Networks and Deep Learning Lab at Moscow Institute of Physics and Technology, cf. http://docs.deeppavlov.ai/en/0.17.0/features/models/spelling_correction.html. However, other techniques for typo correction may likewise be employed.

The segmentation unit 30b may be adapted for sentence segmentation, and in particular may be adapted to split input text of the sample 18 into individual sentences. In addition, the segmentation unit 30b may implement techniques for Named Entity Recognition (NER) to classify tokens in the sample 18 into predefined categories, such as person names, quantity expressions, percentage expressions, names of locations, and/or organizations. Additional information on these techniques is available from DeepPavlov.ai, cf. http://docs.deeppavlov.ai/en/0.17.0/features/models/ner.html#ner-based-model-for-sentence-boundary-detection-task. However, other techniques for sentence segmentation may likewise be employed.

The annotator unit 30 may provide the resulting annotated sample 32\ to the processing unit 14. As described above with reference to Figures 1 and 2, the processing unit 14 is adapted to process the annotated sample 32, wherein the processing unit 14 is adapted to generate a plurality of response hypotheses 20a to 20e and corresponding confidence values 22a to 22e.

To that end, the processing unit 14 may comprise a plurality of hypothesis generation units 34a to 34e, wherein each of the hypothesis generation units 34a to 34e may be adapted to generate at least one, and possibly a plurality of response hypotheses 20a to 20e. The hypothesis generation units 34a to 34e may implement different skills, i.e., different deterministic or stochastic algorithms for generating a response or a set of responses derived from the input sample 18 and its annotations.

In the example illustrated in Fig. 3, the processing unit 14 comprises five different hypothesis generation units 34a to 34e, but this is for illustration only, and the processing unit 14 may generally comprise any number of hypothesis generation units.

The first hypothesis generation unit 34a may represent the Free A.L.I.C.E. AIML chatbot set available from the Google Code Archive at https://code.google.com/archive/p/aiml-en-us-foundation-alice/, and may generate the first response hypothesis 20a.

Similarly, the hypothesis generation unit 34b may represent the Eliza chatbot described in further detail by Joseph Weizenbaum in "ELIZA - A Computer Program for the Study of Natural Language Communication Between Man And Machine", Communications of the ACM, volume 9, Number 1 (January 1966) pp. 36-45, and may yield a second response hypothesis 20b.

The third hypothesis generation unit 34c may implement the Open Domain Question Answering (ODQA) model for answering questions based on Wikipedia entries. Additional information on the ODQA algorithm is available from DeepPavlov.ai, http://docs.deeppavlov.ai/en/0.17.0/features/skills/odqa.html. However, other techniques for retrieving information from Wikipedia or other online encyclopaedias may likewise be employed. In response to a sample question 18, the third hypothesis generation unit 34c will output a third response hypotheses 20c.

The fourth hypothesis generation unit 34d may implement the Knowledge Base Question Answering (KBQA) model adapted to answer any question based on Wikidata knowledge base. Additional information on the KBQA techniques is available DeepPavlov.ai, http://docs.deeppavlov.ai/en/0.17.0/features/models/kbqa.html. As shown in Fig. 3, the hypothesis generation unit 34d may output two response hypotheses 20d, 20d' that are both compatible with the sample 18.

The fifth hypothesis generation unit 34e may employ hypothesis generation techniques based on the Generative Pre-Trained Transformer (GPT), an autoregressive language model that uses deep learning techniques to produce human-like text as a fifth response hypotheses 20e. These techniques are described in additional detail in I. Solaiman et al., "Release Strategies and the Social Impacts of Language Models"; available from the Cornell University preprint server at https://arxiv.0rg/abs/1908.09203 (13 Nov. 2019).

In general, any number of hypothesis generation units may be employed in the processing unit 14, wherein each of the hypothesis generation units may implement a different algorithm to generate at least one response hypothesis. The hypothesis generation units may employ both deterministic and stochastic techniques. In case one or more of the plurality of hypothesis generation units 34a to 34e employ stochastic techniques to generate the respective response hypotheses 20a to 20e, they may, in some embodiments, make use of a quantum random number generator, such as the quantum random number generator 24.

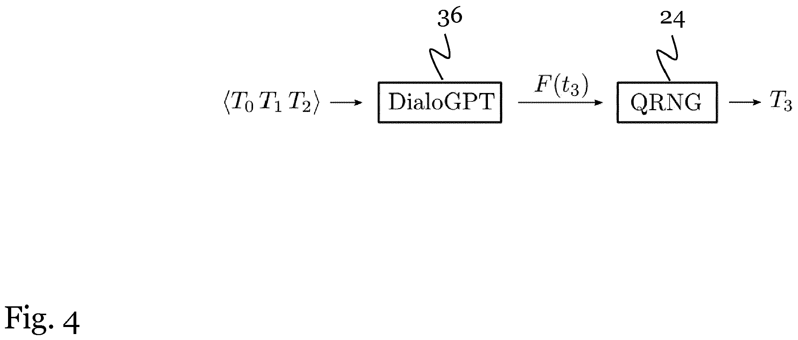

In particular, the techniques of the hypothesis generation unit 34e may be extended beyond conventional GPT to incorporate the quantum random number generator 24 as a source of randomness, as will now be described in some additional detail with reference to Fig. 4.

For instance, the hypothesis generation unit 34e may invoke or query the quantum random number generator 24, and may receive quantum random numbers from the quantum random number generator 24 in substantially the same way as described above with reference to Fig. 1 for the selecting unit 16. In particular, the hypothesis generation unit 34e may employ the random number(s) received from the quantum random number generator 24 to select words or characters randomly according to a probability distribution when generating the response hypothesis 20e.

Fig. 4 is a schematic flow diagram that illustrates how the hypothesis generation unit 34e may generate the response hypotheses 20e iteratively by means of a token prediction model. Assuming that a sequence of (in this case three, but in general any integer number of) tokens $<T_0, T_1, T2>$ has already been selected in a previous step, the token $<T_0, T_1, T2>$ is used as input for a GPT module 36, which implements the GPT model to compute a distribution $F(t_3)$ that depends on the input sequence of tokens $<T_0, T_1, T2>$. The distribution $F(t_3)$ is a distribution in the configuration space of symbols and groups of symbols from which the subsequent token $T_3$ may be selected. A particular implementation of a GPT module 36 that can be chosen in this context is the DialoGPT module available from Microsoft, as described in additional detail in Y. Zhang et al., "DialoGPT: Large-Scale Generative Pre-training for Conversational Response Generation"; available from the Cornell preprint server arXiv:1911.00536 v3 (2 May 2020). For selecting the subsequent token $T_3$ according to the distribution $F(t_3)$, the GPT module 36 may invoke the quantum random number generator 24. In particular, the GPT module 36 may query the quantum random number generator 24 and receive a random number or a plurality of random numbers from the quantum random number generator 24 in return. The GPT module 36 may now use the random number(s) to sample the token $T_3$ according to the distribution $F(t_3)$. The iteratively generated sequence of tokens $<T_0, T_1, T_2, T_3, ..., T_M>$ corresponds to the response hypothesis 20e.

Optionally, the distribution $F(t_3)$ may be shape-shifted by employing the temperature techniques described in I. Solaiman et al., "Release Strategies and the Social Impacts of Language Models"; available from the Cornell University preprint server at https://arxiv.org/abs/1908.09203 (13 Nov. 2019).

Returning to Fig. 3, the processing unit 14 further comprises a hypothesis annotator unit 38 that is adapted to receive the plurality of response hypotheses 20a to 20e generated by the plurality of hypothesis generation units 34a to 34e. The hypothesis annotator unit 38 may be adapted to assign a confidence value 22a to 22e to each of the plurality of response hypotheses 20a to 20e.

In particular, the hypothesis annotator unit 38 may comprise a text encoder unit 38a that is adapted to encode the plurality of response hypotheses 20a to 20e and to assign a real number $c_i$ between 0 and 1 to each of the i = *1,...,* n response hypotheses 20a to 20e. The number $c_i$ may represent the confidence value 22a to 22e, i.e., the probability that the corresponding response hypotheses i is an appropriate response to the sample 18. In the example illustrated above with reference to Fig. 3, n = 6, but in general n may denote any positive integer number.

According to an embodiment, the text encoder unit 38a can be chosen as the PolyAI sentence encoding model ConveRT, as described in further detail in M. Henderson et al., "ConveRT: Efficient and Accurate Conversational Representations from Transformers"; Findings of the Association for Computational Linguistics, EMNLP 2020, pp. 2161-2174, also available from the Cornell University preprint server arXiv:1911.03688 (29 April 2020). However, different evaluation models can also be used instead.

The hypothesis annotator 38 may optionally also comprise a toxicity unit 38b, which may implement a Deep-Pavlov-based regression model adapted to measure levels of hate, insult, threat etc. in the response hypotheses 20a to 20e. The toxicity unit 38b may be adapted to assign a corresponding real number $t_i$ to each of the response hypotheses 20a to 20e, for each i = *1,...,* n. The number $t_i$ may represent the toxicity value of the response hypotheses 20a to 20e.

As further illustrated in Fig. 3, the hypothesis annotator unit 38 provides a tuple of corresponding response hypotheses 20a to 20e as well as the corresponding confidence values $c_i$ and toxicity values $t_i$ to the selecting unit 16.

As described above with reference to Figures 1 and 2, the selecting unit 16 is adapted to select a response 28 randomly from among the plurality of response hypotheses 20a to 20e based on the associated confidence values 22a to 22e by invoking the quantum random number generator 24 that is connected to the selecting unit 16 via the data connection 26.

In one exemplary implementation, the selecting unit 16 may be adapted to assign a probability weight

$$p_i = \frac{c_i}{\sum_{j=1}^{n} c_j} \tag{1}$$

to each confidence value $c_i$, i = *1,...,* n. The selecting unit 16 may then be adapted to sample from among the plurality of response hypotheses 20a to 20e according to the probability distribution $(p_i)_i$ by invoking the quantum random number generator 24.

In some embodiments, additional rules may be added to modify the probability distribution $(p_i)_i$, such as by increasing the probability of hypotheses from those hypothesis generation units 34a to 34e that answered in the same dialogue earlier.

In an implementation of the embodiment described above with reference to Fig. 3, the selecting unit 16 may be adapted to classify response hypotheses 20a to 20e that have a toxicity value $t_i$ higher than a predetermined threshold *T* as toxic, and may be adapted to discard the toxic response hypotheses 20a to 20e by setting their confidence value $c_i$ to 0, thereby effectively preventing these response hypotheses 20a to 20e from being selected as the response 28. For instance, the response hypothesis "I hate you" may be assigned a high toxicity value by the toxicity unit 38b, and may hence be classified as toxic and removed from the set of response hypotheses 20a to 20e.

In another modification of the embodiment described above with reference to Fig. 3, the selecting unit 16 may be adapted to compare the confidence values $c_i$ against a predetermined threshold value d, and may be further adapted to determine the subset of response hypotheses 20a to 20e that satisfy $c_i > d$. If this subset is non-empty, the response 28 may be selected only among the subset as the response hypothesis with the largest confidence value $c_i$. This technique may guarantee that for samples for which the processing unit 14 may determine an accurate response with a high level of confidence, that response is chosen deterministically.

If, on the other hand, the subset of response hypotheses 20a to 20e that satisfy $c_i > d$ is empty, the selecting unit 16 may be adapted to select the response 28 randomly from among the response hypotheses 20a to 20e by invoking the quantum random number generator 24, as described above with reference to Fig. 3.

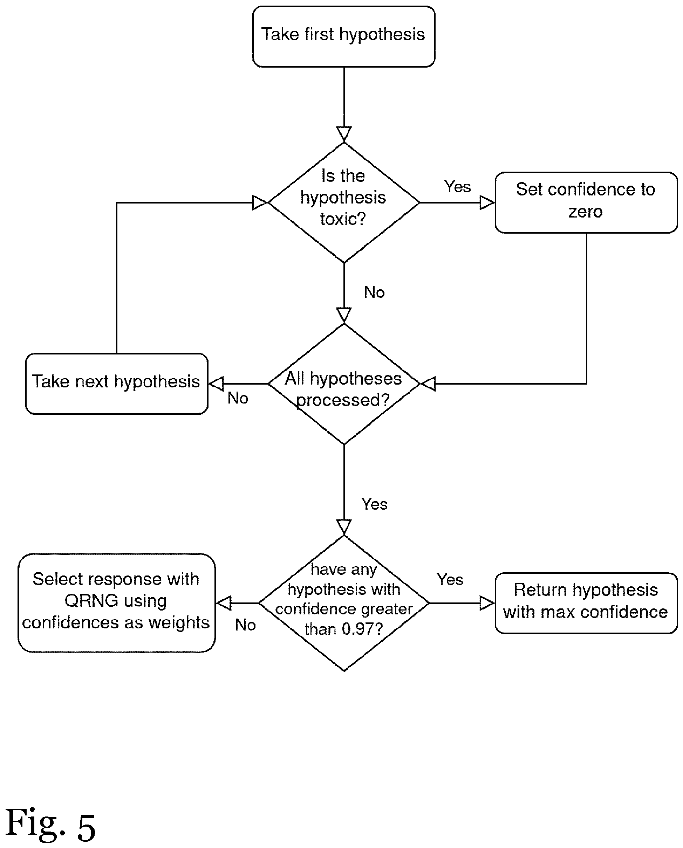

A flow diagram that illustrates a decision tree implemented in the logic of a selecting unit 16 is shown in Fig. 5.

The flow diagram of Fig. 5 implements both a preselection of the response hypotheses 20a to 20e according to a toxicity criterion, and a deterministic selection among the remaining response hypotheses 20a to 20e having confidence values $c_i$ larger than a predetermined threshold value d, where *d=0.97* in this example. Only if no confidence value satisfies $c_i > d=0.97$, the response 28 is selected randomly by invoking the quantum random number generator 24, using the normalized confidence values according to Eq. (1) as weights for the probability distribution.

Given that the selecting unit 16 is adapted to select the response 28 to the sample 18 randomly by invoking the quantum random number generator 24, it is inherently impossible to predict how the system 10' will answer next. As a further consequence, the system 10' shows a variability in the responses, and will usually respond to the same dialogue in different ways, which may reflect the way a human being with a free will would respond. At the same time, samples 18 for which the correct response can be discerned with high probability may be answered deterministically, thereby increasing the reliability of the chatbot.

In some embodiments, the selecting unit 16 may alternatively be adapted to implement a neural network, a tree-based method such as Gradient Boosting (J.H. Friedman: Greedy function approximation: A gradient boosting machine. Annals of statistics 29 (5) (2001) pp.1189-1232), Random Forest (T.K. Ho: Random decision forests. Proceedings of 3rd international conference on document analysis and recognition (1995) pp. 278-282) or another Machine Learning Algorithm to select among the response hypotheses 20a to 20e, wherein the neural network may invoke the quantum random number generator 24.

For instance, the selecting unit 16 may use vectors that encode the context and each possible response. Using these tensors, one may find a cosine similarity between the context and each given response by calculating a dot product of vectors that correspond to the context and a particular response with a trainable Gram matrix. The cosine similarities and vectors encoding the context and possible responses may be provided to the Machine Learning Algorithm as an input. The SoftMax function may be applied to the output of the selecting unit 16 to render the probabilities that some answer needs to be chosen. The trainable parameters of the Machine Learning Algorithm may be optimized, in particular, by minimizing the Loss function that represents the distance between the predicted probability distribution and the true distribution. For instance, Cross-Entropy Loss may be used.

Returning to Figure 3, an output unit 40 may be adapted to return the selected response 28 to the user, such as in the form of a text signal or a speech signal, or in any other format. The dialogue may then continue with the user presenting the chatbot system 10' with another sample 18.

The use of the quantum random number generator 24 in selecting the response 28, and optionally also in generating the plurality of response hypotheses 20a to 20e, may cure many of the potential problems of conventional pseudorandom number generators, including shorter than expected periods for some seed states, lack of uniformity of the distribution for large quantities of generated numbers, correlation of successive values, who are dimensional distribution of the output sequence, or distances between positions where certain values occur are distributed differently from those in a true random sequence distribution.

The techniques of the present disclosure may avoid these patterns. They may also make sure that the chatbot system 10, 10' exhibits a variability in the sense that it responds to the same dialogue in different ways, like a human being with free will would do.

The description of the embodiments and the Figures merely serve to illustrate the techniques of the present disclosure and the advantages associated therewith, but should not be understood to imply any limitation. The scope of the disclosure is to be determined from the appended claims.

Reference Signs

| | |
|---|---|
| 10, 10' | system for natural language processing; chatbot system |
| 12 | receiving unit |
| 14 | processing unit |
| 16 | selecting unit |
| 18 | sample |
| 20; 20a-20e | plurality of response hypotheses |
| 22; 22a-22e | plurality of confidence values |
| 24 | quantum random number generator |
| 26 | data connection |
| 28 | selected response |
| 30 | annotator unit |
| 30a | spelling unit |
| 30b | segmentation unit |
| 32 | annotated sample |
| 34a-34e | hypothesis generation units |
| 36 | GPT module of hypothesis generation unit 34e |
| 38 | hypothesis annotator unit |
| 38a | text encoder unit |
| 38b | toxicity unit |
| 40 | output unit |

**Claims**

1. A method for natural language processing, comprising:

   receiving a sample (18) comprising natural language;
   processing the sample (18), wherein processing the sample (18) comprises generating a plurality of response hypotheses (20; 20a-20e) and generating a plurality of confidence values (22; 22a-22e), wherein each response hypothesis (20; 20a-20e) is associated with a corresponding confidence value (22; 22a-22e); and
   selecting a response (28), comprising selecting the response (28) randomly among the plurality of response hypotheses (20; 20a-20e) based at least in part on the corresponding confidence value (22; 22a-22e) by means of a quantum random number generator (24).

2. The method according to claim 1, wherein selecting the response (28) comprises generating a probability distribution for the plurality of response hypotheses (20; 20a-20e) with corresponding weights that are based on the respective confidence values (22; 22a-22e), and selecting among the plurality of response hypotheses (20; 20a-20e) randomly according to the corresponding weights by means of the quantum random number generator (24).

3. The method according to any of the preceding claims, wherein selecting the response (28) comprises comparing the corresponding confidence value (22; 22a-22e) with a predetermined threshold value, and selecting the response (28) randomly among the plurality of response hypotheses (20; 20a-20e) based at least in part on the corresponding confidence value (22; 22a-22e) by means of the quantum random number generator (24) in case the corresponding confidence value (22; 22a-22e) is smaller than the predetermined threshold value.

4. The method according to claim 3, comprising selecting the response (28) deterministically among the plurality of response hypotheses (20; 20a-20e) based at least in part on the corresponding confidence value (22; 22a-22e) in case the corresponding confidence value (22; 22a-22e) is no smaller than the predetermined threshold value.

5. The method according to any of the preceding claims, wherein selecting the response (28) comprises preselecting the response hypotheses (20; 20a-20e) according to predefined criteria, wherein the preselecting may optionally comprise discarding a response hypothesis (20; 20a-20e) according to the predefined criteria.

6. The method according to any of the preceding claims, wherein generating the plurality of response hypotheses (20; 20a-20e) comprises generating at least a part of the plurality of response hypotheses (20; 20a-20e) by means of the quantum random number generator (24).

7. The method according to any of the preceding claims, wherein generating the plurality of response hypotheses (20; 20a-20e) comprises selecting words of the response hypotheses (20; 20a-20e) randomly, in particular by means of the quantum random number generator (24).

8. The method according to any of the preceding claims, further comprising annotating the sample (18), in particular annotating the sample (18) prior to generating the plurality of response hypotheses (20; 20a-20e) and generating the plurality of confidence values (22; 22a-22e).

9. A computer program comprising computer-readable instructions, wherein the instructions, when read on a computer, cause the computer to implement a method according to any of the preceding claims.

10. A system (10; 10') for natural language processing, comprising:

    a receiving unit (12) adapted to receive a sample (18) comprising natural language;
    a processing unit (14) adapted to process the sample (18), wherein the processing unit (14) is adapted to generate a plurality of response hypotheses (20; 20a-20e) and to generate a plurality of confidence values (22; 22a-22e), wherein each response hypothesis (20; 20a-20e) is associated with a corresponding confidence value (22; 22a-22e); and
    a selecting unit (16) adapted to select a response (28), wherein the selecting unit (16) is adapted to select the response (28) randomly among the plurality of response hypotheses (20; 20a-20e) based at least in part on the corresponding confidence value (22; 22a-22e) by means of a quantum random number generator (24).

11. The system (10; 10') according to claim 10, wherein the selecting unit (16) is adapted to generate a probability distribution for the plurality of response hypotheses (20; 20a-20e) with corresponding weights that are based on the confidence values (22; 22a-22e), and wherein the selecting unit (16) is further adapted to select among the plurality of response hypotheses (20; 20a-20e) randomly according to the corresponding weights by means of the quantum random number generator (24).

12. The system (10; 10') according to claim 10 or 11, wherein the selecting unit (16) is adapted to compare the corresponding confidence value (22; 22a-22e) with a predetermined threshold value, and further adapted to select the response (28) randomly among the plurality of response hypotheses (20; 20a-20e) based at least in part on the corresponding confidence value (22; 22a-22e) by means of the quantum random number generator (24) in case the corresponding confidence value (22; 22a-22e) is smaller than the predetermined threshold value.

13. The system (10; 10') according to any of the claims 10 to 12, wherein the selecting unit (16) is adapted to preselect the response hypotheses (20; 20a-20e) according to predefined criteria, in particular wherein the selecting unit (16) is adapted to discard a response hypothesis (20; 20a-20e) according to the predefined criteria.

14. The system (10; 10') according to any of the claims 10 to 13, wherein the processing unit (14) is adapted to generate at least a part of the plurality of response hypotheses (20; 20a-20e) by means of the quantum random number generator (24).

15. The system (10; 10') according to any of the claims 10 to 14, further comprising an annotator unit (30) adapted to annotate the sample (18), in particular to annotate the sample (18) prior to generating the plurality of response hypotheses (20; 20a-20e) and generating the plurality of confidence values (22; 22a-22e).

EP 4 261 735 A1

Fig. 1

receiving a sample comprising natural language — S10

processing the sample, wherein processing the sample comprises generating a plurality of response hypotheses and generating a plurality of confidence values, wherein each response hypothesis is associated with a corresponding confidence value — S12

selecting a response, comprising selecting the response randomly among the plurality of response hypotheses based at least in part on the corresponding confidence value by means of a quantum random number generator — S14

# Fig. 2

Fig. 3

EP 4 261 735 A1

$$\langle T_0 \, T_1 \, T_2 \rangle \longrightarrow \boxed{\text{DialoGPT}} \xrightarrow{F(t_3)} \boxed{\text{QRNG}} \longrightarrow T_3$$

36

24

Fig. 4

Fig. 5

| | Europäisches Patentamt<br>European Patent Office<br>Office européen des brevets | **EUROPEAN SEARCH REPORT** | **Application Number**<br>EP 22 16 7932 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | US 2016/062735 A1 (WILBER SCOTT A [US])<br>3 March 2016 (2016-03-03)<br>* paragraphs [0002], [0003], [0009],<br>[0013], [0015], [0027], [0028] *<br>* paragraphs [0197], [0201], [0205],<br>[0206]; figure 17 *<br>* paragraph [0209]; figure 18 *<br>* paragraph [0211]; figure 20 *<br>* paragraphs [0212], [0213], [0220] –<br>[0224]; figure 21 * | 1-15 | INV.<br>G06F40/35<br>G06F7/58<br>G06N10/00<br><br>ADD.<br>G06F40/216<br>G06F40/232<br>G06F40/253<br>G06F40/289<br>G06F40/295 |
| T | HERRERO-COLLANTES MIGUEL ET AL: "Quantum random number generators",<br>REVIEWS OF MODERN PHYSICS,<br>vol. 89, no. 1,<br>21 October 2016 (2016-10-21), XP055822716,<br>ISSN: 0034-6861, DOI:<br>10.1103/RevModPhys.89.015004<br>Retrieved from the Internet:<br>URL:https://arxiv.org/pdf/1604.03304.pdf><br>* the whole document * | 1-15 | |
| A | MIKHAIL BURTSEV ET AL: "DeepPavlov:<br>Open-Source Library for Dialogue Systems",<br>PROCEEDINGS OF THE 56TH ANNUAL MEETING OF<br>THE ASSOCIATION FOR COMPUTATIONAL<br>LINGUISTICS-SYSTEM DEMONSTRATIONS,<br>1 July 2018 (2018-07-01), pages 122-127,<br>XP055597237,<br>Melbourne, Australia<br>DOI: 10.18653/v1/P18-4021<br>* abstract *<br>* section 3;<br>page 124; figure 1 *<br>* sections 5 and 6;<br>page 125 – page 126 * | 1-15 | **TECHNICAL FIELDS<br>SEARCHED (IPC)**<br><br>G06F<br>G06N |

-/--

The present search report has been drawn up for all claims

| Place of search | Date of completion of the search | Examiner |
|---|---|---|
| Berlin | 27 September 2022 | Chéron, Laurent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

**EUROPEAN SEARCH REPORT**

Application Number

EP 22 16 7932

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | IULIAN V SERBAN ET AL: "A Deep Reinforcement Learning Chatbot", ARXIV.ORG, CORNELL UNIVERSITY LIBRARY, 201 OLIN LIBRARY CORNELL UNIVERSITY ITHACA, NY 14853, 7 September 2017 (2017-09-07), XP081282935, * abstract * * sections 1 to 4.2; page 1 - page 13; figures 1,2 * * section 5.4; page 33 * | 1-15 | |
| | ----- | | |

TECHNICAL FIELDS
SEARCHED (IPC)

The present search report has been drawn up for all claims

| Place of search | Date of completion of the search | Examiner |
|---|---|---|
| Berlin | 27 September 2022 | Chéron, Laurent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 22 16 7932

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2022

| Patent document cited in search report | | Publication date | Patent family member(s) | | Publication date |
|---|---|---|---|---|---|
| US 2016062735 | A1 | 03-03-2016 | EP | 2994826 A1 | 16-03-2016 |
| | | | US | 2016062735 A1 | 03-03-2016 |
| | | | WO | 2014182672 A1 | 13-11-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. HERRERO-COLLANTES ; J. C. GARCIA-ES-CARTIN.** Quantum Random Number Generators. *Reviews of Modern Physics,* 2017, vol. 89, 015004
- **JOSEPH WEIZENBAUM.** ELIZA - A Computer Program for the Study of Natural Language Communication Between Man And Machine. *Communications of the ACM,* January 1966, vol. 9 (1), 36-45
- **I. SOLAIMAN et al.** *Release Strategies and the Social Impacts of Language Models,* 13 November 2019, https://arxiv.0rg/abs/1908.09203
- **Y. ZHANG et al.** *DialoGPT: Large-Scale Generative Pre-training for Conversational Response Generation,* 02 May 2020
- **I. SOLAIMAN et al.** *Release Strategies and the Social Impacts of Language Models,* 13 November 2019, https://arxiv.org/abs/1908.09203
- **M. HENDERSON et al.** ConverRT: Efficient and Accurate Conversational Representations from Transformers. *Findings of the Association for Computational Linguistics, EMNLP 2020,* 29 April 2020, 2161-2174
- **J.H. FRIEDMAN.** Greedy function approximation: A gradient boosting machine. *Annals of statistics,* 2001, vol. 29 (5), 1189-1232
- **T.K. HO.** Random decision forests. *Proceedings of 3rd international conference on document analysis and recognition,* 1995, 278-282